# EUROPÄISCHE PATENTANMELDUNG

(11) **EP 3 661 050 A1**
(43) Veröffentlichungstag der Anmeldung: **03.06.2020**
(21) Anmeldenummer: 19210413.1
(22) Anmeldetag: 20.11.2019
(51) Int. Cl.: H02S 20/00

(54) **UNTERKONSTRUKTION FÜR RAHMENGEFASSTE SOLARMODULE SOWIE MODULKLEMME ZUR MONTAGE VON RAHMENGEFASSTEN SOLARMODULEN AUF EINEM MODULTRÄGER**

(30) Priorität: 29.11.2018 DE 102018220622
(71) Anmelder: Hephaistos Solar GmbH, 75443 Ötisheim (DE)
(72) Erfinder: Wettach, Alfred W., 75443 Ötisheim (DE)
(74) Vertreter: Patent- und Rechtsanwälte Ullrich & Naumann

(57) **Zusammenfassung**

Eine Unterkonstruktion für rahmengefasste Solarmodule, wobei die Solarmodul-Rahmen (14) ein Rahmenprofil aufweisen, an dessen Rückseite bereichsweise oder umlaufend ein sich nach innen erstreckender Rahmenschenkel (15) ausgebildet ist, mit einer Tragstruktur, wobei die Tragstruktur mindestens einen oberen Längsträger (4a) und einen unteren Längsträger (4b) umfasst, sowie mit auf den Längsträgern (4a, 4b) montierten Modulträgern (5) zur Aufnahme der Solarmodule (6), ist im Hinblick auf eine vereinfachte und schnellere Montage dadurch gekennzeichnet, dass die Modulträger (5) jeweils einen vorderen Steg (10) zur Auflage des Rahmenschenkels (15) eines Solarmodul-Rahmens (14) aufweisen und dass zur Fixierung eines Solarmoduls (6) auf einem Modulträger (5) eine Modulklemme (7) vorgesehen ist, die eine mittels einer Schraubverbindung mit dem vorderen Steg (10) des Modulträgers (5) herstellbare Druckkraft auf den Rahmenschenkel (15) ausübt. Des Weiteren ist eine Modulklemme zur Montage von rahmengefassten Solarmodulen auf einem Modulträger angegeben.

## Beschreibung

Die Erfindung betrifft eine Unterkonstruktion für rahmengefasste Solarmodule, wobei die Solarmodul-Rahmen ein Rahmenprofil aufweisen, an dessen Rückseite bereichsweise oder umlaufend ein sich nach innen erstreckender Rahmenschenkel ausgebildet ist, mit einer Tragstruktur, wobei die Tragstruktur mindestens einen oberen Längsträger und einen unteren Längsträger umfasst, sowie mit auf den Längsträgern montierten Modulträgern zur Aufnahme der Solarmodule.

Des Weiteren betrifft die Erfindung eine Modulklemme zur Montage von rahmengefassten Solarmodulen auf einem Modulträger, wobei die Solarmodul-Rahmen ein Rahmenprofil aufweisen, an dessen Rückseite bereichsweise oder umlaufend ein sich nach innen erstreckender Rahmenschenkel ausgebildet ist.

Unterkonstruktionen für rahmengefasste Solarmodule sowie Modulklemmen der in Rede stehenden Art zur Montage von rahmengefassten Solarmodulen auf Modulträgern sind seit Jahren aus der Praxis bekannt, sowohl für die Errichtung von Photovoltaikanlagen auf Flach- oder Satteldächern, als auch für die Montage von Solarmodulen in Freiflächen-Solarkraftwerken.

Photovoltaikanlagen bzw. Solarkraftwerke umfassen im Allgemeinen eine Mehrzahl von miteinander vernetzten Solarmodulen, welche mit Hilfe von halbleitenden Schichten aus einfallendem Sonnenlicht elektrische Energie in Form von Gleichstrom erzeugen. Die auf diese Weise gewonnene Energie kann auf unterschiedliche Weise genutzt werden. So ist bspw. eine direkte Nutzung möglich, wobei überschüssige Energie in Solarbatterien gespeichert werden kann. Alternativ kann die erzeugte Energie über Wechselrichter als Wechselstrom auch in das öffentliche Stromnetz eingespeist werden.

Zur Befestigung von Solarmodulen auf Modulträgern einer jeweiligen Unterkonstruktion kommen in der Regel Modulklemmen zum Einsatz, die einseitig (im Fall von Endklemmen) oder beidseitig (im Fall von Mittelklemmen) ausgebildete Haltestege aufweisen, die im montierten Zustand auf einem Randbereich des Modulrahmens aufliegen und das Solarmodul somit auf dem Modulträger fixieren. Pro Solarmodul werden dabei mindestens zwei, üblicherweise jedoch vier oder mehr Modulklemmen verbaut, die an unterschiedlichen Stellen des Solarmoduls angesetzt und jeweils von vorne mit dem Modulträger verschraubt werden.

Bei den Unterkonstruktionen mit Modulklemmen der oben beschriebenen Art ist nachteilig, dass pro Solarmodul eine Vielzahl von Arbeitsgängen ausgeführt werden muss. Dies wirkt sich umso nachteiliger aus, je größer die zu installierende Photovoltaikanlage ausfällt. Insbesondere bei der Errichtung von Freiflächenanlagen mit einer Unterkonstruktion mit geneigten Modulträgern, auf denen oftmals drei oder mehr Solarmodule hintereinander montiert werden, kommt erschwerend hinzu, dass sich aufgrund des Neigungswinkels der Modulträger die oberen Solarmodule bereits in einer für die Monteure nicht mehr ohne weiteres zugänglichen Höhe befinden. Vor diesem Hintergrund erweist sich insbesondere eine Verschraubung der Modulklemmen von vorne, d.h. an einer Vorderseite der Solarmodule, als problematisch.

An dieser Stelle sei angemerkt, dass die Begriffe "Vorderseite" bzw. "Rückseite" im Rahmen der vorliegenden Anmeldung stets so zu verstehen sind, dass mit "Vorderseite" die dem Sonnenlicht zugewandte Seite der Solarmodule und mit "Rückseite" die vom Sonnenlicht abgewandte Seite der Solarmodule bezeichnet ist. Im gleichen Sinne werden die Begriffe "vorne/vordere(r/s)" bzw. "hinten/hintere(r/s)" verwendet. Demgegenüber bezeichnen die Begriffe "oben/obere(r/s)" bzw. "unten/untere(r/s)" eine (relative) Höhenangabe in Bezug auf den Untergrund, auf dem die Unterkonstruktion installiert ist.

Der vorliegenden Erfindung liegt daher die Aufgabe zugrunde, eine Unterkonstruktion sowie eine Modulklemme der eingangs genannten Art derart auszugestalten und weiterzubilden, dass bei hoher Stabilität und Sicherheit der Konstruktion eine schnellere und einfachere Montage ermöglicht ist.

Erfindungsgemäß wird die voranstehende Aufgabe durch die Merkmale des Anspruchs 1 gelöst. Danach ist die in Rede stehende Unterkonstruktion dadurch gekennzeichnet, dass die Modulträger jeweils einen vorderen Steg zur Auflage des Rahmenschenkels eines Solarmodul-Rahmens aufweisen und dass zur Fixierung eines Solarmoduls auf einem Modulträger eine Modulklemme vorgesehen ist, die eine mittels einer Schraubverbindung mit dem vorderen Steg des Modulträgers einstellbare Druckkraft auf den Rahmenschenkel ausübt.

Die zugrundeliegende Aufgabe wird des Weiteren durch eine Modulklemme nach Anspruch 13 gelöst. Danach ist die in Rede stehende Modulklemme dadurch gekennzeichnet, dass sie zur Fixierung des Solarmoduls auf dem Modulträger eine mittels einer Schraubverbindung mit dem vorderen Steg des Modulträgers einstellbare Druckkraft auf den Rahmenschenkel auszuüben geeignet ist.

In erfindungsgemäßer Weise ist erkannt worden, dass sich dadurch, dass die Modulklemmen nicht auf die Vorderseite des Solarmodul-Rahmens, sondern vielmehr auf den rückseitigen Rahmenschenkel des Solarmodul-Rahmens einwirken, eine konstruktive Ausgestaltung ergibt, die eine vereinfachte Montage ermöglicht. So ist es insbesondere möglich, die Schraubverbindung zwischen Modulklemme und Modulträger, welche die Fixierung des Solarmoduls auf dem Modulträger bewirkt, von der Rückseite des Solarmoduls aus zu schrauben, statt wie im Stand der Technik üblich von der Vorderseite aus. Auf diese Weise lassen sich auch die oberen Solarmodule einer Reihe von mehreren auf einem geneigten Modulträger hintereinander angeordneten Solarmodulen vergleichsweise einfach montieren.

Gemäß einer Ausführungsform umfasst die Unterkonstruktion eine Anzahl von in einem Untergrund verankerbaren Pfosten. Jeder dieser Pfosten, die vorzugsweise in regelmäßigen Abständen aufgestellt sind, trägt einen Querträger, auf dem die Längsträger der Tragstruktur montiert sind. Die Querträger haben dabei eine definierte solarenergetisch günstige Neigung, welche den Neigungswinkel der montierten Solarmodule vorgibt.

Gemäß einer vorteilhaften Ausgestaltung weist der vordere Steg der Modulträger jeweils eine oder mehrere Einhängelaschen zum Einhängen von Solarmodulen auf. Die Einhängelaschen bilden einen nach oben hin geöffneten Eingriff, in den der Rahmenschenkel des jeweiligen Solarmoduls eingreifen kann. Zur Erleichterung der Montage können auf dem vorderen Steg der Modulträger jeweils unmittelbar unterhalb der Einhängelaschen rampenförmige Montagehilfen ausgebildet sind. Damit ist es auf einfache Weise möglich, ein Solarmodul auf die (geneigten) Modulträger aufzulegen und dieses über die rampenförmigen Montagehilfen über die jeweiligen Einhängelaschen hinweg nach oben zu schieben. Durch ein sich anschließendes Absenken des Solarmoduls gelangt der Rahmenschenkel des Moduls in Eingriff mit der Einhängelasche, wodurch das Modul fixiert ist. Vorzugsweise ruht jedes Solarmodul dabei auf zwei Modulträgern, wobei in Abhängigkeit von der Größe der Module auch mehr als zwei Modulträger pro Solarmodul vorgesehen sein können.

Eine vorteilhafte Ausgestaltung sieht vor, dass die Modulklemme eine zum Aufsitzen auf dem vorderen Steg des Modulträgers ausgebildete Klemmplatte sowie ein sich daran in Längsrichtung des Modulträgers anschließendes Klemmelement zum Zusammenwirken mit dem Rahmenschenkel umfasst. Klemmplatte und Klemmelement können einstückig gefertigt sein. Alternativ könnte das Klemmelement auch mit der Klemmplatte verschweißt oder auf sonstige Art fest verbunden sein.

Gemäß einer Ausführungsform weist die Klemmplatte, die zur Befestigung der Modulklemme auf dem Modulträger dient, ein im Wesentlichen U-förmiges Querschnittsprofil mit einem mittleren Abschnitt und seitlichen Flanschen auf. Der mittlere Abschnitt dient dabei zur Auflage auf dem vorderen Steg des Modulträgers, während die seitlichen Flansche den vorderen Steg des Modulträgers gewissermaßen umgreifen. In vorteilhafter Weise ist die Klemmplatte dabei so dimensioniert, dass vor dem Verschrauben der Klemmplatte mit dem Modulträger ein weitestgehend spielfreies Rutschen der Modulklemme auf dem Modulträger ermöglicht ist.

Im Hinblick auf das Klemmelement kann vorgesehen sein, dass dieses zur Gewährleistung eines sicheren Halts eine gezahnte oder wellenförmig ausgebildete Klemmfläche bzw. Klemmbacke aufweist.

Im Hinblick auf eine besonders leichte Montage kann vorgesehen sein, dass die Klemmplatte eine in einer Längsrichtung der Modulklemme vorzugsweise zentrierte Durchgangsbohrung mit einer von einer Rückseite der Klemmplatte her vormontierten Schraube aufweist. In hierzu korrespondierender Weise kann der vordere Steg des Modulträgers ein Langloch aufweisen, wobei das obere Ende des Langlochs derart vergrößert ist, dass eine Durchführung des Schraubenkopfes der an der Klemmplatte vormontierten Schraube ermöglicht ist. Das Langloch selbst ist dabei schmaler ausgeführt als der Schraubenkopf. Bei der Schraube handelt es sich in vorteilhafter Weise um eine selbstausrichtende und zudem selbstschneidende oder selbstfurchende Schraube, vorzugsweise als Sechskantschraube mit Flansch ausgeführt.

Zur endgültigen Montage bzw. Fixierung eines Solarmoduls, das wie oben beschrieben mit seinem oberen Rahmenabschnitt in die an den jeweiligen Modulträgern ausgebildeten Einhängelaschen eingehängt ist, wird an jedem der Modulträger eine Modulklemme angebracht. Dazu wird die Modulklemme auf die Vorderseite des jeweiligen Modulträgers aufgesetzt, wobei der Schraubenkopf der vormontierten Schraube durch das vergrößerte obere Ende des Langlochs hindurchgeführt wird. In diesem eingeführten Zustand wird die Modulklemme entlang des Langlochs nach unten hin verschoben, bis das Klemmelement der Modulklemme über dem Rahmenschenkel des Solarmoduls liegt. In dieser Positionierung der Modulklemme wird die vormontierte Schraube angezogen, sodass der Rahmenschenkel durch das Klemmelement auf den Modulträger gedrückt und das Solarmodul somit sicher fixiert wird.

Zur weiterreichenden Vereinfachung der Montage ist gemäß einer Ausführungsform vorgesehen, dass die Modulträger einen speziellen Profilquerschnitt aufweisen, der im Wesentlichen im Sinne eines Z-Profils ausgebildet ist. Im konkreten könnten die Modulträger dabei zusätzlich zu dem vorderen Steg einen hinteren Steg zur Montage auf einem jeweiligen der Längsträger sowie einen den vorderen und den hinteren Steg verbindenden zentralen Vertikalsteg umfassen, wobei vorderer und hinterer Steg auf unterschiedlichen Seiten des zentralen Vertikalsteg angeordnet sind. Durch diese Anordnung sind sowohl der vordere als auch der hintere Steg frei zugänglich, so dass sich einerseits die Modulklemme leicht auf dem vorderen Steg festlegen lässt und andererseits per Ein-Hand-Montage eine kraftschlüssige Verbindung zwischen dem hinteren Steg und dem jeweiligen Längsträger herstellen lässt.

In weiter vorteilhafter Weise können die Modulträger jeweils mindestens ein hakenförmiges Element aufweisen, welches vorzugsweise an dem hinteren Steg der Modulträger ausgebildet ist. Dieses Element, das im Sinne einer Lasche ausgeführt sein kann, stellt eine Montagehilfe dar und dient zum Einhängen des jeweiligen Modulträgers in die Längsträger, wodurch die Modulträger bereits fixiert werden. Durch diese Fixierung ist eine optimierte Montage durch eine einzige Arbeitskraft ermöglicht.

In einer konkreten Ausführungsform könnte diese Montagehilfe so ausgeführt sein, dass die Modulträger jeweils zwei hakenförmige Elemente aufweisen, die entsprechend dem Abstand der Längsträger beabstandet zueinander an einer von den Solarmodulen abgewandten Seite des hinteren Steges der Modulträger ausgebildet sind. Dementsprechend kann ein Modulträger gleichzeitig in den oberen Längsträger und in den unteren Längsträger eingehängt werden, wodurch sich eine besonders sichere Fixierung ergibt.

Gemäß einer weiter vorteilhaften Ausgestaltung sind die Längsträger als Profilschienen mit einem asymmetrischen Profilquerschnitt ausgeführt, wodurch eine vereinfachte Montage der Längsträger auf den Querträgern ermöglicht ist. Im konkreten kann dabei vorgesehen sein, dass die Längsträger einen im Wesentlichen U- oder C-förmigen Profilquerschnitt aufweisen. Eine Asymmetrie kann in diesem Fall dadurch realisiert werden, dass die beiden sich seitlich an den mittleren Steg des Profils anschließenden Flansche in unterschiedlichen Längen ausgeführt sind. Bei einer Auflage des längeren der beiden Flansche auf dem Querträger kann eine kraftschlüssige Verbindung zwischen Längsträger und Querträger durch schnelle Ein-Hand-Montage hergestellt werden. Darüber hinaus ist der asymmetrische Profilquerschnitt in besonderer Weise für eine komfortable und zügige Einlage der notwendigen Elektroverkabelung (sog. "String-Einlage") geeignet.

Es gibt nun verschiedene Möglichkeiten, die Lehre der vorliegenden Erfindung in vorteilhafter Weise auszugestalten und weiterzubilden. Dazu ist einerseits auf die den Ansprüchen 1 und 13 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: zeigt in einer schematischen Seitenansicht eine Unterkonstruktion für rahmengefasste Solarmodule gemäß einem Ausführungsbeispiel der Erfindung,
- Fig. 2: zeigt in einer schematischen Frontansicht die Unterkonstruktion gemäß Fig. 1,
- Fig. 3: zeigt in einer schematischen Ansicht eine Modulklemme gemäß einem Ausführungsbeispiel der Erfindung,
- Fig. 4: zeigt in einer schematischen Ansicht ein auf einem Modulträger einer Unterkonstruktion montiertes Solarmodul unter Verwendung einer Modulklemme gemäß einem Ausführungsbeispiel der Erfindung,
- Fig. 5: zeigt in einer schematischen Ansicht einen Profilquerschnitt eines Modulträgers einer Unterkonstruktion gemäß einem Ausführungsbeispiel der Erfindung,
- Fig. 6: zeigt in einer schematischen Ansicht einen Profilquerschnitt eines Längsträgers einer Unterkonstruktion gemäß einem Ausführungsbeispiel der Erfindung, und
- Fig. 7: zeigt in einer perspektivischen Ansicht einen Modulträger einer Unterkonstruktion gemäß einem Ausführungsbeispiel der Erfindung.

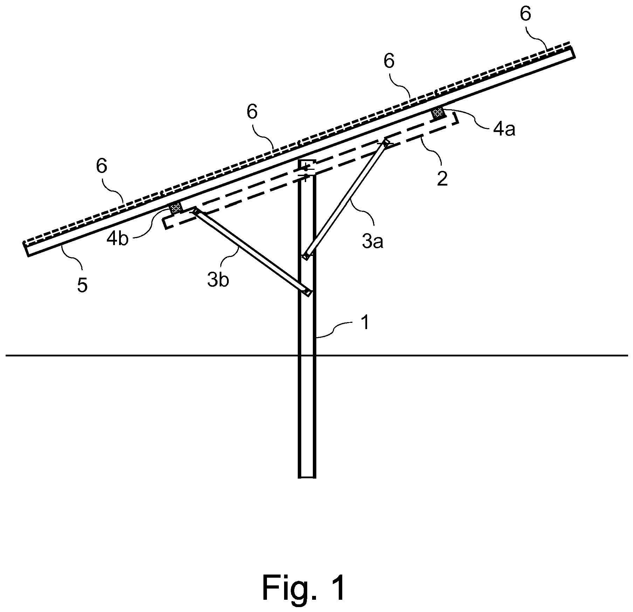

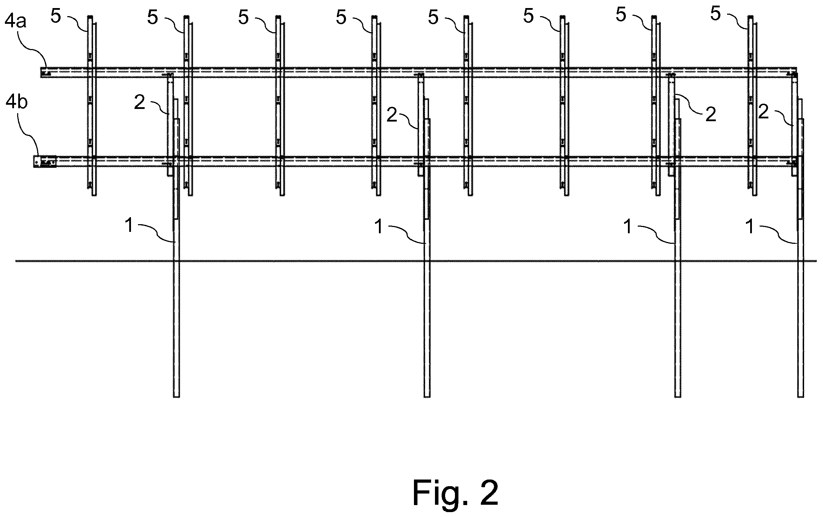

Die Fig. 1 und 2 zeigen schematisch in einer Seitenansicht und einer Frontansicht eine Photovoltaikanlage mit einer Unterkonstruktion gemäß einem Ausführungsbeispiel der Erfindung. Die Unterkonstruktion umfasst eine Anzahl von in einem Untergrund verankerbaren Pfosten 1. An den Pfosten 1 ist jeweils ein Querträger 2 in einem solarenergetisch günstigen Neigungswinkel montiert. Zur Stabilisierung sind an den Pfosten 1 jeweils zwei Stützstreben 3a, 3b angebracht, die den Querträger 2 beidseitig des Postens 1 abstützen.

Auf den Querträgern 2 ist eine Tragstruktur montiert, wobei die Tragstruktur einen oberen Längsträger 4a und einen unteren Längsträger 4b umfasst. In Abhängigkeit von der Größe bzw. Auslegung der Photovoltaikanlage kann die Tragstruktur auch mehr als zwei Längsträger aufweisen, bspw. einen mittleren Längsträger zusätzlich zu dem oberen Längsträger 4a und dem unteren Längsträger 4b.

Auf den Längsträgern 4a, 4b sind in regelmäßigen Abständen Modulträger 5 montiert, auf denen schließlich die Solarmodule 6 angebracht sind. In dem in den Fig. 1 und 2 dargestellten Ausführungsbeispiel liegt jedes Solarmodul 6 auf zwei Modulträgern 5 auf, wobei jeweils vier Solarmodule 6 hintereinander montiert sind. Es versteht sich, dass in Abhängigkeit von der Größe der Solarmodule 6 auch andere Varianten realisiert werden können, bspw. mit einer Auflage von Solarmodulen 6 auf jeweils drei Modulträgern 5.

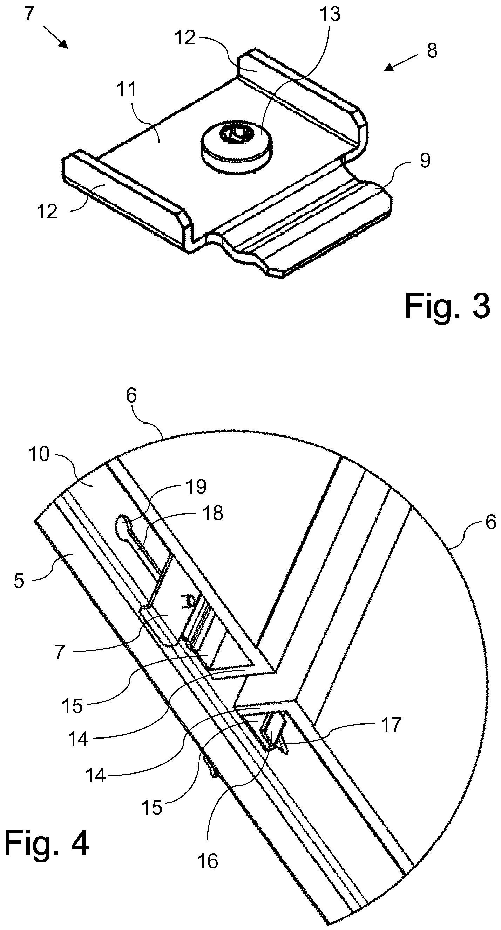

Fig. 3 zeigt schematisch ein Ausführungsbeispiel einer Modulklemme 7, wie sie im Rahmen der vorliegenden Erfindung zur Montage der Solarmodule 6 auf den Modulträgern 5 zum Einsatz kommt. Die Modulklemme 7 umfasst eine Klemmplatte 8 sowie ein sich daran anschließendes Klemmelement 9. Die Klemmplatte 8 ist zum Aufsitzen auf dem vorderen Steg 10 eines Modulträgers 5 ausgebildet und weist hierzu ein im Wesentlichen U-förmiges Querschnittsprofil mit einem mittleren Abschnitt und seitlichen Flanschen auf. Der mittlere Abschnitt umfasst eine Auflagefläche 11, die im montierten Zustand, der im Rahmen eines Ausführungsbeispiels in Fig. 4 schematisch dargestellt ist, auf dem vorderen Steg 10 des Modulträgers 5 aufliegt. Die beidseitig der Auflagefläche 11 ausgebildeten Flansche der Klemmplatte 8 dienen als Führungskanten 12, die ein Abrutschen der Modulklemme 7 von dem Modulträger 5 verhindern. Insgesamt ist die Klemmplatte 8 dabei so dimensioniert, dass vor dem Verschrauben der Klemmplatte 8 mit dem Modulträger 5 ein weitestgehend spielfreies Rutschen der Modulklemme 7 auf dem Modulträger 5 ermöglicht ist.

Wie in Fig. 3 zu erkennen, weist die Klemmplatte 8 der Modulklemme 7 eine in Längsrichtung der Modulklemme 7 zentrierte Durchgangsbohrung auf. In dieser Durchgangsbohrung ist von der Rückseite der Klemmplatte 8 her, d.h. von der Seite der Klemmplatte 8 mit der Auflagefläche 11, eine Schraube 13 vormontiert. Die Schraube 13 ist als selbstausrichtende und zudem selbstschneidende oder selbstfurchende Schraube 13 ausgeführt. In dem dargestellten Ausführungsbeispiel ist die Schraube 13 als Inbusschraube ausgeführt, wobei andere Ausgestaltungen, bspw. als Außensechskant, mit oder ohne Flansch, ebenfalls möglich sind.

Fig. 4 zeigt in einer schematischen Schnittdarstellung ein auf einem Modulträger 5 einer Unterkonstruktion montiertes Solarmodul 6 unter Verwendung der oben beschriebenen Modulklemme 7 gemäß Fig. 3. Wie in Fig. 4 zu erkennen, handelt es sich bei den hier in Rede stehenden Solarmodulen 6 um rahmengefasste Solarmodule 6 mit einem Rahmen 14, dessen Rahmenprofil an der Rahmenrückseite einen sich nach innen erstreckenden Rahmenschenkel 15 aufweist. Dieser Rahmenschenkel 15 kann vollumfänglich oder auch nur bereichsweise ausgebildet sein.

Zur Montage eines Solarmoduls 6 wird dieses in einem ersten Arbeitsschritt zunächst mit seiner Rahmenrückseite auf den bzw. die jeweiligen Modulträger 5 aufgelegt. Wie in Fig. 4 zu erkennen, ist auf dem vorderen Steg 10 des Modulträgers 5 eine Einhängelasche 16 ausgebildet, die einen nach oben hin geöffneten Eingriff bildet. In einem zweiten Arbeitsschritt wird das Solarmodul 6 über diese Einhängelasche 16 hinweg auf dem Modulträger 5 nach oben verschoben und anschließend wieder abgesenkt, wodurch der hintere, sich nach innen erstreckende Rahmenschenkel 15 des Solarmodul-Rahmens 14 in Eingriff mit der Einhängelasche 16 gelangt. Auf dem vorderen Steg 10 des Modulträgers 5 ist unmittelbar unterhalb der Einhängelasche 16 eine rampenförmige Montagehilfe 17 ausgebildet, die ein leichtgängiges Verschieben des Solarmoduls 6 über die Einhängelasche 16 hinweg ermöglicht.

In dieser eingehängten Position, die in Fig. 4 für das untere der beiden Solarmodule 6 dargestellt ist, befindet sich der untere Rahmenabschnitt des Solarmoduls 6 in einer Position auf dem Modulträger 5, die mit einem in dem vorderen Steg 10 des Modulträgers 5 ausgebildeten Langloch 18 korrespondiert, wie dies in Fig. 4 für das obere der beiden Solarmodule 6 dargestellt ist. Das Langloch 18 ist schmaler ausgeführt als der Schraubenkopf der vormontierten Schraube 13, weist jedoch an seinem oberen Ende einen vergrößerten Kopfabschnitt 19 auf, der so bemessen ist, dass er die Durchführung des Schraubenkopfes der an der Klemmplatte 8 vormontierten Schraube 13 ermöglicht.

Zur endgültigen Fixierung des bereits mit seinem oberen Rahmenabschnitt in die Einhängelasche 16 eingehängten Solarmoduls 6 wird die Modulklemme 7 auf den vorderen Steg 10 des Modulträgers 5 aufgesetzt, wobei der Schraubenkopf der vormontierten Schraube 13 durch den Kopfabschnitt 19 des Langlochs 18 geführt wird, sodass sich der Schraubenkopf auf der hinteren Seite des Modulträgers 5 befindet. In diesem eingeführten Zustand wird die Modulklemme 7 entlang des Langlochs 18 nach unten hin verschoben, bis das Klemmelement 9 der Modulklemme 7 über dem nach innen gerichteten Rahmenschenkel 15 des Solarmoduls 6 liegt. In dieser Positionierung der Modulklemme 7 wird in einem letzten Arbeitsschritt die vormontierte Schraube 13 von der Rückseite des Modulträgers 5 her angezogen, wodurch das Klemmelement 9 den Rahmenschenkel 15 auf den Modulträger 5 drückt und das Solarmodul 6 somit sicher fixiert.

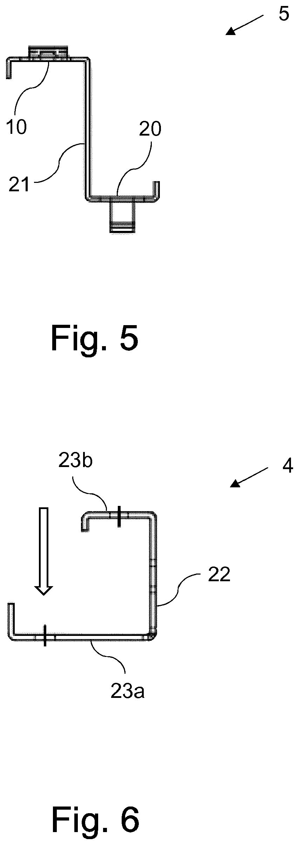

Fig. 5 zeigt in einer schematischen Ansicht einen Profilquerschnitt eines Modulträgers 5 einer Unterkonstruktion gemäß einem Ausführungsbeispiel der Erfindung. Der Profilquerschnitt des Modulträgers 5 ist im Wesentlichen im Sinne eines Z-Profils ausgebildet und umfasst zusätzlich zu dem vorderen Steg 10, auf dem wie oben beschrieben die Modulklemme 7 festgelegt wird, einen hinteren Steg 20 sowie einen den vorderen und den hinteren Steg verbindenden zentralen Vertikalsteg 21. Der hintere Steg 20 dient zur Montage des Modulträgers 5 auf einem jeweiligen der Längsträger 4 der Tragstruktur. Bei der dargestellten Ausführungsform sind der vordere Steg 10 und der hintere Steg 20 in vorteilhafter Weise auf unterschiedlichen Seiten des zentralen Vertikalsteg angeordnet, sodass beide Stege 10, 20 für Montagezwecke frei zugänglich sind. Dementsprechend lassen sich zum einen die Modulklemmen 7 leicht auf dem vorderen Steg 10 von der Rückseite her festschrauben und zum anderen der hintere Steg 20 von der Vorderseite her auf dem jeweiligen Längsträger 4 festschrauben.

Fig. 6 zeigt in einer schematischen Ansicht einen Profilquerschnitt eines Längsträgers 4 einer Unterkonstruktion gemäß einem Ausführungsbeispiel der Erfindung. Gemäß diesem Ausführungsbeispiel weisen die Längsträger 4 einen im Wesentlichen U- oder C-förmigen Profilquerschnitt auf, wobei dieser asymmetrisch ausgeführt ist. Im konkreten sind die beiden sich seitlich an den mittleren Steg 22 des Profils anschließenden Flansche 23a, b dabei in unterschiedlichen Längen ausgeführt, wobei der längere der beiden Flansche 23a zur Montage auf dem jeweiligen Querträger 2 vorgesehen ist und der kürzere der beiden Flansche 23b mit dem hinteren Steg 20 des jeweiligen Modulträgers 5 verschraubt wird. Die asymmetrische Ausgestaltung hat im Hinblick auf die Montage der Längsträger 4 auf den Querträgern 2 den Vorteil, dass eine entsprechende Schraubverbindung frei zugänglich ist, wie durch den Pfeil in Fig. 6 angedeutet, wodurch eine schnelle Ein-Hand-Montage ermöglicht ist.

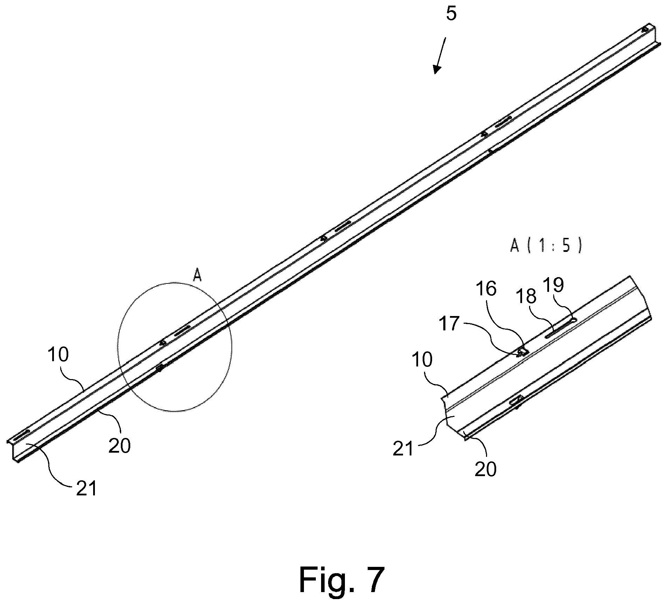

Fig. 7 zeigt in einer perspektivischen Darstellung sowohl in einer Gesamtsicht als auch in einem vergrößerten Ausschnitt einen Modulträger 5 einer Unterkonstruktion gemäß einem Ausführungsbeispiel der Erfindung. Zu erkennen sind die im Zusammenhang mit Fig. 4 beschriebene abwechselnde Anordnung von Langlöchern 18 und Einhängelaschen 16 mit rampenförmigen Montagehilfen 17 entlang des Modulträgers 5 sowie der im Zusammenhang mit Fig. 5 beschriebene Profilquerschnitt des Modulträgers 5 im Sinne eines Z-Profils.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: Pfosten
- 2: Querträger
- 3a, 3b: Stützstreben
- 4a, 4b: oberer/unterer Längsträger
- 5: Modulträger
- 6: Solarmodul
- 7: Modulklemme
- 8: Klemmplatte
- 9: Klemmelement
- 10: vorderer Steg (Modulträger)
- 11: Auflagefläche
- 12: Führungskante
- 13: vormontierte Schraube
- 14: Solarmodul-Rahmen
- 15: Rahmenschenkel
- 16: Einhängelasche
- 17: rampenförmige Montagehilfe
- 18: Langloch
- 19: Kopfabschnitt
- 20: hinterer Steg (Modulträger)
- 21: Vertikalsteg (Modulträger)
- 22: mittleren Steg (Längsträger)
- 23a, b: Flansche (Längsträger)

## Patentansprüche

1. Unterkonstruktion für rahmengefasste Solarmodule, wobei die Solarmodul-Rahmen (14) ein Rahmenprofil aufweisen, an dessen Rückseite bereichsweise oder umlaufend ein sich nach innen erstreckender Rahmenschenkel (15) ausgebildet ist, mit einer Tragstruktur, wobei die Tragstruktur mindestens einen oberen Längsträger (4a) und einen unteren Längsträger (4b) umfasst, sowie mit auf den Längsträgern (4a, 4b) montierten Modulträgern (5) zur Aufnahme der Solarmodule (6),
**dadurch gekennzeichnet, dass** die Modulträger (5) jeweils einen vorderen Steg (10) zur Auflage des Rahmenschenkels (15) eines Solarmodul-Rahmens (14) aufweisen und dass zur Fixierung eines Solarmoduls (6) auf einem Modulträger (5) eine Modulklemme (7) vorgesehen ist, die eine mittels einer Schraubverbindung mit dem vorderen Steg (10) des Modulträgers (5) herstellbare Druckkraft auf den Rahmenschenkel (15) ausübt.

2. Unterkonstruktion nach Anspruch 1, **dadurch gekennzeichnet, dass** die Längsträger (4a, 4b) der Tragstruktur auf einer Anzahl von Querträgern (2) montiert sind, wobei die Querträger (2) jeweils mit einem definierten Neigungswinkel an einem in einem Untergrund verankerbaren Pfosten (1) montiert sind.

3. Unterkonstruktion nach Anspruch 1 oder 2, **dadurch gekennzeichnet, dass** der vordere Steg (10) des Modulträgers (5) eine oder mehrere Einhängelaschen (16) aufweist, die jeweils zum Einhängen eines oberen Abschnitts des Rahmenschenkels (15) eines Solarmoduls (6) ausgebildet sind.

4. Unterkonstruktion nach Anspruch 3, **dadurch gekennzeichnet, dass** auf dem vorderen Steg (10) des Modulträgers (5) jeweils unmittelbar unterhalb der Einhängelaschen (16) rampenförmige Montagehilfen (17) ausgebildet sind.

5. Unterkonstruktion nach einem der Ansprüche 1 bis 4, **dadurch gekennzeichnet, dass** die Modulklemme (7) eine im Wesentlichen U-förmige, zum Aufsitzen auf dem vorderen Steg (10) des Modulträgers (5) ausgebildete Klemmplatte (8) sowie ein sich daran in Längsrichtung des Modulträgers (5) anschließendes, vorzugsweise wellenförmig ausgebildetes Klemmelement (9) zum Zusammenwirken mit dem Rahmenschenkel (15) umfasst.

6. Unterkonstruktion nach Anspruch 5, **dadurch gekennzeichnet, dass** die Klemmplatte (8) eine in einer Längsrichtung der Modulklemme (7) vorzugsweise zentrierte Durchgangsbohrung mit einer von einer Rückseite der Klemmplatte (8) her vormontierten Schraube (13) aufweist.

7. Unterkonstruktion nach einem der Ansprüche 1 bis 6, **dadurch gekennzeichnet, dass** der vordere Steg (10) des Modulträgers (5) ein oder mehrere Langlöcher (18) aufweist, wobei das jeweils obere Ende eines Langlochs (18) derart vergrößert ist, dass eine Durchführung des Schraubenkopfes der vormontierten Schraube (13) ermöglicht ist.

8. Unterkonstruktion nach einem der Ansprüche 1 bis 7, wobei die Modulträger (5) zusätzlich zu dem vorderen Steg (10) einen hinteren Steg (20) zur Montage auf einem jeweiligen der Längsträger (4a, 4b) sowie einen den vorderen und den hinteren Steg (10, 20) verbindenden zentralen Vertikalsteg (21) umfassen, wobei der vordere und der hintere Steg (10, 20) auf unterschiedlichen Seiten des zentralen Vertikalstegs (21) angeordnet sind.

9. Unterkonstruktion nach einem der Ansprüche 1 bis 8, **dadurch gekennzeichnet, dass** an den Modulträgern (5) jeweils mindestens ein hakenförmiges Element zum Einhängen des Modulträgers (5) in die Längsträger (4a, 4b) ausgebildet ist.

10. Unterkonstruktion nach einem der Ansprüche 1 bis 8, **dadurch gekennzeichnet, dass** die Modulträger (5) jeweils zwei hakenförmige Elemente aufweisen, die entsprechend dem Abstand der Längsträger (4a, 4b) beabstandet zueinander an den Modulträgern (5) ausgebildet sind.

11. Unterkonstruktion nach einem der Ansprüche 1 bis 10, **dadurch gekennzeichnet, dass** die Längsträger (4a, 4b) als Profilschienen mit einem asymmetrischen Profilquerschnitt ausgeführt sind.

12. Unterkonstruktion nach einem der Ansprüche 1 bis 11, **dadurch gekennzeichnet, dass** die Längsträger (4a, 4b) als Profilschienen mit einem im Wesentlichen U- oder C-förmigen Profilquerschnitt mit einem Steg (22) und zwei sich daran anschließenden Flanschen (23a, 23b) ausgeführt sind, wobei die beiden Flansche (23a, 23b) eine unterschiedliche Länge aufweisen.

13. Modulklemme zur Montage von rahmengefassten Solarmodulen auf einem Modulträger einer Unterkonstruktion nach einem der Ansprüche 1 bis 12, wobei die Solarmodul-Rahmen (14) ein Rahmenprofil aufweisen, an dessen Rückseite bereichsweise oder umlaufend ein sich nach innen erstreckender Rahmenschenkel (15) ausgebildet ist,
**dadurch gekennzeichnet, dass** die Modulklemme (7) zur Fixierung des Solarmoduls (6) auf dem Modulträger (5) eine mittels einer Schraubverbindung mit dem vorderen Steg (10) des Modulträgers (5) herstellbare Druckkraft auf den Rahmenschenkel (15) auszuüben geeignet ist.

14. Modulklemme nach Anspruch 13, **dadurch gekennzeichnet, dass** die Modulklemme (7) eine im Wesentlichen U-förmige, zum Aufsitzen auf dem vorderen Steg (10) des Modulträgers (5) ausgebildete Klemmplatte (8) sowie ein sich daran in Längsrichtung des Modulträgers (5) anschließendes, vorzugsweise wellenförmig ausgebildetes Klemmelement (9) zum Zusammenwirken mit dem Rahmenschenkel (15) umfasst.

15. Photovoltaik-Anlage, insbesondere Photovoltaik-Freiflächenanlage, mit einer Anzahl von auf einer Unterkonstruktion nach einem der Ansprüche 1 bis 12 monierten Solarmodulen.
